(19) Europäisches Patentamt

European Patent Office

Office européen des brevets

(11) Veröffentlichungsnummer: **0 269 164**
**A1**

(12) **EUROPÄISCHE PATENTANMELDUNG**

(21) Anmeldenummer: 87202168.8

(22) Anmeldetag: 06.11.87

(51) Int. Cl.⁴ **A01K 11/00** , A61M 37/00 , A61D 7/00

(30) Priorität: 09.11.86 NL 8602835

(43) Veröffentlichungstag der Anmeldung:
01.06.88 Patentblatt 88/22

(84) Benannte Vertragsstaaten:
AT CH DE ES FR GB IT LI NL SE

(71) Anmelder: Staalkat B.V.
Ambachtsstraat 4
NL-7122 MP Aalten(NL)

(72) Erfinder: Niemeijer, Halbe Jacobus
Hoogeveenseweg 21
NI-9435 TC Bruntinge(NL)

(74) Vertreter: Smulders, Theodorus A.H.J. et al
Vereenigde Octrooibureaux Nieuwe Parklaan
107
NL-2587 BP 's-Gravenhage(NL)

(54) **Tätowiervorrichtung sowie Bedienungseinrichtung, Wählelement und Behälter für eine derartige Vorrichtung.**

(57) Eine Tätowiervorrichtung enthält einen Nadelhalter (23, 123) mit einem Bestand matrixförmig angeordneter Hohlnadeln (33, 133) die in der Längsrichtung zwischen einer wirksamen und einer unwirksamen Stellung bewegbar sind und je eine Eintrittsöffnung und eine Austrittsöffnung enthalten. Es gibt einen Behälter (32) mit Kontrastflüssigkeit, der, wenn sich die betreffenden Nadeln (33, 133) in der wirksamen Stellung befinden, über die Eintrittsöffnungen (35c, 135c) mit den Hohlräumen dieser Nadeln (33, 133) in Verbindung steht. Weiter ist ein austauschbares Wählelement (18, 118) vorgesehen, das in Abhängigkeit vom anzubringenden Symbol mit Nadeln (33, 133) des Bestands koppelbar ist.

Eine Bedienungseinrichtung (1) arbeitet mit dem Nadelhalter (23, 123), dem Wählement (18, 118) und dem Behälter (32) zusammen und enthält Druckmittel, von denen erste Druckmittel (12) bei der Erregung mittels des Wählelements (18, 118) Nadeln (33, 133) in die wirksame Stellung einführen und mit den freien Enden in das zu markierende Objekt drücken, und von denen zweite Druckmittel (32a) auf die Flüssigkeit im Behälter (32) Druck ausüben und die Flüssigkeit durch die Hohlräume über die Austrittsöffnungen einer Anzahl von Nadeln (33, 133) in das Objekt hineinpressen.

Der Nadelhalter (23, 123) enthält eine Flüssigkeitskammer (31, 131), die mit dem Behälter (32) in Verbindung steht. Die Eintrittsöffnungen (35c, 135c) der Nadeln (33, 133) sind in der unwirksamen Stellung in bezug auf die Flüssigkeitskammer (31, 131) geschlossen, während ausschließlich die Eintrittsöffnungen der erwähnten Anzahl vom Wählelement (18, 118) gewählter Nadeln in der wirksamen Stellung dieser Nadeln (33, 133) in bezug auf die Flüssigkeitskammer geöffnet sind.

FIG.4C

EP 0 269 164 A1

## Tätowiervorrichtung sowie Bedienungseinrichtung, Wählelement und Behälter für eine derartige Vorrichtung.

Die Erfindung betrifft eine Tätowiervorrichtung, bestehend aus einem Nadelhalter mit einem Bestand matrixförmig angeordneter Hohlnadeln, die in der Längsrichtung zwischen einer wirksamen und einer unwirksamen Stellung bewegbar sind und je eine Eintritts-und eine Austrittsöffnung enthalten, mit einem austauschbaren, Kontrastflüssigkeit enthaltenden Behälter, der in wirksamer Stellung der betreffenden Nadeln über die Eintrittsöffnungen mit den Hohlräumen in diesen Nadeln in Verbindung steht, mit einem austauschbaren Wählelement, das in Abhängigkeit vom anzubringenden Symbol mit einer Anzahl von Nadeln des Nadelbestands koppelbar ist, mit einer Bedienungseinrichtung, die mit dem Nadelhalter, dem Wählelement und dem Behälter zusammenarbeitet und Druckmittel enthält, von denen erste Druckmittel bei der Erregung über das Wählelement Nadeln in die wirksame Stellung bringen, die mit den freien Enden in das zu tätowierende Objekt drücken, und zweite Druckmittel auf die Flüssigkeit im Behälter Druck ausüben und diese Flüssigkeit durch die Hohlräume über die Austrittsöffnungen einer Anzahl vom Wählelement ausgewählter Nadeln in das Objekt einführen.

Eine Tätowiervorrichtung der erwähnten Art ist aus EP-A-25252 bekannt. Bei dieser bekannten Tätowiervorrichtung enthält das Wählelement, das als eine leicht austauschbare Platte ausgeführt ist, eine Anzahl von Anschlägen, die durch die ersten Druckmittel bei der Erregung an Enden einer Anzahl von Nadeln drücken, um im Objekt ein Symbol anzubringen. Auf diese Weise wird mit Hilfe des Wählelements abhängig vom anzubringenden Symbol eine Anzahl von Nadeln des Matrixbestands in die wirksame Stellung eingeführt. Das Wählelement enthält weiter eine Anzahl von Flüssigkeitskanälen, wobei jeder Flüssigkeitskanal nahe bei einem Anschlag mündet. Diese Mündung jedes Flüssigkeitskanals wird mit der Eintrittsöffnung einer der gewählten Nadeln gekoppelt, während die andere Mündung jedes Flüssigkeitskanals mit dem Behälter verbunden wird. Auf diese Weise wird über das Wählelement die Kontrastflüssigkeit aus dem Behälter nach den Nadeln gepreßt. Die flüssigkeitsdichte Ausführung der Kopplung jedes der Flüssigkeitskanäle mit dem Behälter und den Nadeln erfordert bei der bekannten Vorrichtung eine genaue Passung. Dies macht eine hohe Genauigkeit bei der Herstellung der oft nur für einmalige Verwendung bestimmten Wählelemente erforderlich, während die Nadeln für die Kopplung an der Seite der Eintrittsöffnungen genau ausgeführt sein sollen, zu welchem Zweck die Nadeln einen bestimmten Durchmesser haben müssen. Letzteres stellt ein Hindernis dar auf dem Weg zur Herstellung dünnerer Nadeln, um das Eindringen der Nadeln in das Objekt zu erleichtern.

Der Erfindung liegt die Aufgabe zugrunde, bei einer Tätowiervorrichtung der erwähnten Art das Wählelement zu vereinfachen und die Kopplung zwischen dem Wählelement und den Nadeln auf leichte Weise erfolgen zu lassen.

Zur Lösung dieser Aufgabe ist die Erfindung dadurch gekennzeichnet, daß
-der Nadelhalter eine Flüssigkeitskammer enthält, die mit dem Behälter in Verbindung steht und in der sich die Nadeln für einen Teil ihrer Länge erstrecken,
die Eintrittsöffnungen der Nadeln in der unwirksamen Stellung in bezug auf die Flüssigkeitskammer geschlossen sind, während ausschließlich die Eintrittsöffnungen der genannten Anzahl vom Wählelement gewählter Nadeln in der wirksamen Stellung dieser Nadeln in bezug auf die Flüssigkeitskammer geöffnet sind.

Bei der Tätowiervorrichtung nach der Erfindung sorgt das Wählelement zwar für eine Flüssigkeitsverbindung zwischen dem Behälter und den Hohlräumen der gewählten Nadeln, aber diese Verbindung verläuft um das Wählelement herum über die Flüssigkeitskammer in den Nadelhalter und einen Anschluß der Flüssigkeitskammer am Behälter. Also sind die Nadeln zuverlässig und einfach mit dem Behälter verbindbar. Das Wählelement selbst dient nur zum Ausüben von Druck auf Nadeln, um diese in die wirksame Stellung einzuführen und in das Objekt hineinzudrücken. Der Vorteil dabei ist, daß das Wählelement als ein preisgünstiges, massengefertigtes Produkt, beispielsweise aus Kunststoff, ausführbar ist. Durch die im Nadelhalter erfolgende Verbindung der Holhräume der Nadeln mit der Flüssigkeitskammer wird eine Verstopfung der Eintrittsöffnungen durch Verschmutzung auf wirksame Weise vermieden. Auch ermöglicht diese Weise der Flüssigkeitsverbindung eine weitgehende Miniaturisierung der Nadeln, was für ein leichtes Eindringen der Nadel in das Objekt und zum Anbringen eines verhältnismässig kleinen oder feinmaschigen Symbols vorteilhaft sein kann. Die Tätowiervorrichtung nach der Erfindung ist mit Vorteil zum Markieren von Tieren verwendbar. Die Vorrichtung eignet sich jedoch auch zum Markieren anderer Objekte, bei denen eine Markierung mittels Nadeln und Kontrastflüssigkeit angebracht werden kann.

Eine bevorzugte Ausführungsform einer Tätowiervorrichtung nach der Erfindung, bei der die ersten Druckmittel ein mit dem Nadelhalter zusammenarbeitendes Druckelement enthalten, um Nadeln mit Hilfe des Wählelements in die wirksame Stellung einzuführen und in das Objekt hineinzupressen, ist dadurch gekennzeichnet, daß der Nadelhalter mit den Nadeln in bezug auf das Druckelement in der Längsrichtung der Nadeln zwischen einer ersten und einer zweiten Stellung bewegbar ist, wobei durch diese Bewegung eine Kopplung bzw. Entkopplung zwischen Endteilen der erwähnten Anzahl von Nadeln und dem Wählelement auftritt. Auf diese Weise erfolgt das Tätowieren in zwei Schritten, d.h. zunächst wird das Objekt in bezug auf den Nadelhalter festgesetzt und anschließend werden nach dem Ankoppeln der Nadeln an das Wählelement die Anzahl der gewählten Nadeln in das Objekt hineingedrückt. Hierdurch wird eine gute Qualität der Tätowierung erreicht.

Eine andere bevorzugte Ausführungsform einer Tätowiervorrichtung, bei der der Nadelhalter eine Grundplatte mit Öffnungen enthält, wodurch die freien Enden der Nadeln bewegbar sind, ist dadurch gekennzeichnet, daß beim Errregen des Druckelements der Nadelhalter in bezug auf das Druckelement gegen Federwirkung aus der ersten in die zweite Stellung übergeht, nachdem die Grundplatte an das Objekt gedrückt ist, und daß der Nadelhalter eine Druckplatte enthält, die nach dem Ankoppeln von Nadeln und Wählelement beim Übergang in die wirksame Stellung von Nadeln gegen Federwirkung in Richtung der Grundplatte gedrückt wird. Auf diese Weise wird das Objekt über die Grundplatte gut fixiert, während die Druckplatte das Anpressen der Nadeln an das Wählelement unter einer guten gleichmäßigen Federspannung gewährleistet.

In diesem Zusammenhang ist eine weitere bevorzugte Ausführungsform dadurch gekennzeichnet, daß sich die Druckplatte nach Ablauf der Erregung des Druckelements unter Federwirkung von der Grundplatte weg bewegt und dabei die in der wirksamen Stellung befindlichen zusammen in die unwirksame Stellung zurückführt. Über die Druckplatte werden alle in der wirksamen Stellung befindlichen Nadeln unter Federwirkung gleichzeitig aus dem Objekt herausgezogen, sobald das Symbol angebracht ist und der Druck des Druckelements abgebaut wird. Da die Druckplatte die Möglichkeit hat, auch auf Nadeln mit einem verhältnismäßig kleinen Durchmesser Druck auszuüben, können die Nadeln einen geringen Durchmesser besitzen.

Eine weitere bevorzugte Ausführungsform ist dadurch gekennzeichnet, daß die Druckplatte die Nadeln in der unwirksamen Stellung an eine Anschlagplatte des Nadelhalters drückt, wobei sie den Nadelhalter in der ersten und in der zweiten Stellung gegen das Druckelement positioniert. Mit Hilfe der Anschlagplatte ist in den Endstellungen der Nadelhalter gegen das Druckelement gut positioniert, während die Druckplatte dafür sorgt, daß die Nadeln in der unwirksamen Stellung bis in die Grundplatte gut zurückgezogen sind.

Eine andere bevorzugte Ausführungsform ist dadurch gekennzeichnet, daß sich die Flüssigkeitskammer im Nadelhalter zwischen der Druckplatte und der Anschlagplatte und sich die Nadeln in der wirksamen Stellung mit den Eintrittsöffnungen in der Flüssigkeitskammer befinden. So ist auf einfache Weise eine Verbindung in der wirksamen Stellung der Nadeln zwischen dem Behälter und den Hohlräumen in den Nadeln möglich.

In diesem Zusammenhang ist eine weitere bevorzugte Ausführungsform dadurch gekennzeichnet, daß die Druckplatte mit allen Nadeln fest verbunden ist und die Anschlagplatte in der wirksamen Stellung der Nadeln vom Wählelement an die Eintrittsöffnungen von Nadeln gedrückt wird, so daß diese Nadeln in bezug auf die Flüssigkeitskammer abgeschlossen sind. Also wird ein einfach verwirklichbarer Nadelhalter erhalten, bei dem die Abdichtung der Flüssigkeitskammer einfach durchführbar ist und die Nadeln eine verhältnismäßig geringe Länge haben können.

Eine weitere bevorzugte Ausführungsform, bei der die Bedienungseinrichtung einen Bedienungshebel enthält, ist dadurch gekennzeichnet, daß der Hebel nahe bei einem Ende eine scharnierende Klinke trägt, die mit dem Hebel zusammen einen Teil der ersten Druckmittel bildet und bei der Erregung in einer wirksamen Stellung auf das Druckelement eine Kraft ausübt, bei einer gemeinsamen Schwenkung mit dem Hebel nach einer unwirksamen Stellung scharniert und in einer Ausgangsstellung des Hebels unter Federwirkung in die wirksame Stellung zurückschwenkt. So ist auf dem Hebel eine Klinkeneinrichtung vorgesehen, die einerseits gut bemerkbar mit einem Klickgeräusch das Vollenden der Tätowierung angibt und andererseits wieder zweckmäßig in die wirksame Stellung zurückkehrt, ohne dabei die Rückbewegung des Hebels zu stören. Auch diese Rückkehr erfolgt mit einem Klickgeräusch.

In diesem Zusammenhang ist noch eine bevorzugte Ausführungsform dadurch gekennzeichnet, daß die Bedienungseinrichtung mit dritten Druckmitteln versehen ist, die eine Pumpvorrichtung enthalten, die bei dem Schwenken des Hebels erregt wird und auf einen Kolben im Behälter einen Druck ausübt, wobei der Kolben ein Teil der zweiten Druckmittel ist und die Flüssigkeit im Behälter und in der Flüssigkeitskammer unter ständigem Druck hält. Die dritten Druckmittel sorgen dafür, daß auf die Flüssigkeit im Behälter und in der Flüssigkeitskammer über die Hebelbewegungen nach der Bedienung der Vorrichtung ein konstanter Druck ausgeübt wird. Vorzugsweise wird die Pumpvorrichtung bei der Rückkehrbewegung des Bedienungshebels erregt. Unmittelbar nach jeder Erregung des Druckelements erfolgt mit Hilfe des Kolbens die Zufuhr einer bestimmten Flüssigkeitmenge nach den freien Enden der Nadeln, wobei der Kolben um jedesmal einen Schritt verschoben wird. Durch Kapillarwirkung bleibt die Restflüssigkeit im Nadelhohlraum zurück, wodurch keine Unterbrechung in der Tintenzufuhr auftreten kann, was zum Erreichen einer maximalen Auswirkung und zum Vermeiden von Verstopfungen vorteilhaft ist.

Eine weitere bevorzugte Ausführungsform ist dadurch gekennzeichnet, daß der Behälter als eine längliche Patrone ausgeführt ist, die mit Hilfe einer Druckfeder in der Bedienungseinrichtung positioniert und nahe bei einem ersten Ende über ein Rücklaufventil mit der Pumpvorrichtung und nahe bei einem zweiten Ende über ein Rücklaufventil mit der Flüssigkeitskammer verbunden ist. Auf diese Weise wird ein handliches System erhalten, dessen Behälter einfach austauschbar ist. Die Rücklaufventile sorgen für einen ständigen Druck auf die Flüssigkeit im Behälter und in der Flüssigkeitskammer.

Die Erfindung bezieht sich weiter auf eine Bedienungseinrichtung auf einem austauschbaren Behälter sowie auf ein austauschbares Wählelement, das bei einer derartigen Tätowiervorrichtung anwendbar ist.

Ausführungsbeispiele der Erfindung werden nachstehend anhand der Zeichnung näher erläutert, wobei sich die Erfindung jedoch nicht auf die angeführten Beispiele beschränkt. Es zeigen

Fig. 1 eine perspektivische Darstellung eines ersten Ausführungsbeispiels einer erfindungsgemäßen Tätowiervorrichtung,

Fig. 2 in der Vergrösserung zum Teil im Schnitt und zum Teil in der Ansicht eine Vorrichtung nach Fig. 1,

Fig. 3 eine Ansicht des Wählelements bei der Anwendung in der Tätowiervorrichtung,

Fig. 4A, B und C einen Querschnitt entlang der Linie IV-IV A, B und C in Fig. 2, wobei die Tätowiervorrichtung in einer Ruhestellung bzw. in einer Zwischenstellung bzw. in einer Betriebsstellung dargestellt ist,

Fig. 5A und B einen Querschnitt wie in Fig. 4 durch einen Teil einer Tätowiervorrichtung entsprechend einem zweiten Beispiel, wobei die Vorrichtung in einer Ruhestellung bzw. in einer Betriebsstellung dargestellt ist.

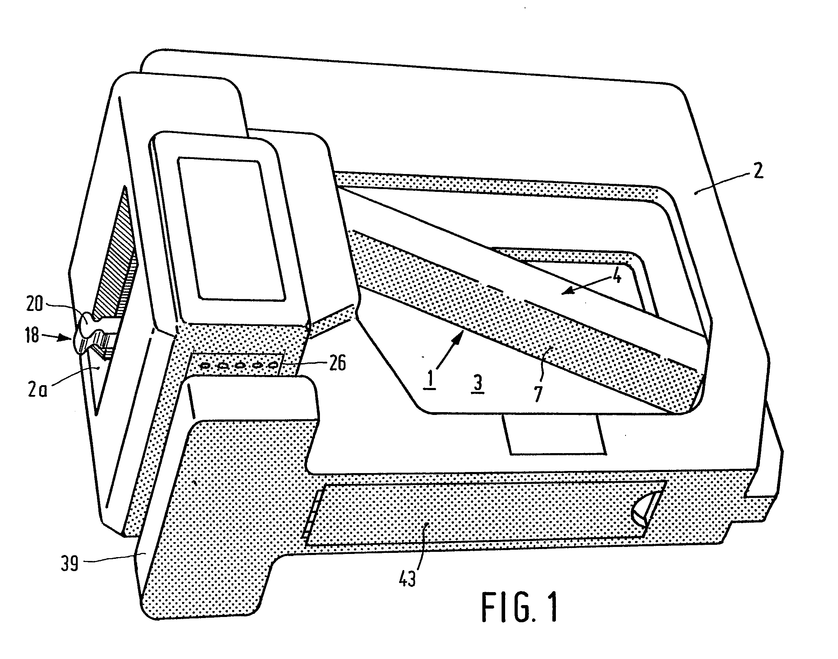

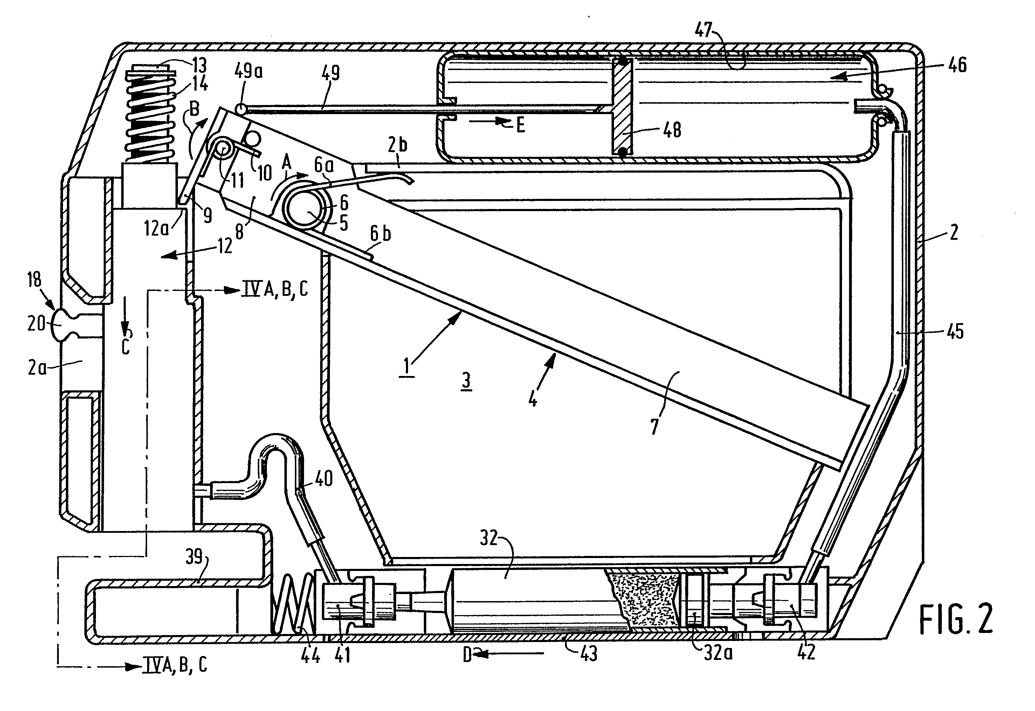

Die in Fig. 1 und 2 dargestellte Tätowiervorrichtung enthält eine Bedienungseinrichtung 1 sowie ein rechteckiges Gehäuse 2, das mehrere Teile der Tätowiervorrichtung umgibt. Das Gehäuse 2 liegt um eine Aussparung 3, in der ein Bedienungshebel 4 der Bedienungseinrichtung 1 angeordnet ist. Wie aus der Fig. 2 ersichtlich ist, ist der Hebel 4 um einen mit dem Gehäuse verbundenen Achszapfen 5 schwenkbar, um den eine Feder 6 gewickelt ist, die mit den Endteilen 6a und 6b an eine Innenwand 2b des Gehäuses 2 bzw. an den Hebel 4 drückt. Die Feder 6 drückt also den Hebel 4 in Richtung des Pfeiles A um den Achszapfen 5 in eine Ausgangsstellung. Der Hebel 4 enthält einen Griff 7 und trägt auf einem an der anderen Seite des Achszapfens 5 liegenden, verhältnismäßig kurzen Erregerteil 8 eine Klinke 9. Die Klinke 9 ist mit dem Teil 8 nahe bei dem vom Achszapfen 5 abgewandten Ende des Teiles 8 scharnierbar verbunden. Eine Feder 10 drückt die Klinke 9 in die wirksame Stellung entsprechend Fig. 2 in Richtung des Pfeiles B um einen Achszapfen 11, und in dieser Stellung liegt die Klinke 9 an einem nicht dargestellten Anschlag an.

Die Klinke 9 bildet mit dem Hebel 4 erste Druckmittel der Bedienungseinrichtung 1, zu der auch ein mit der Klinke 9 zusammenarbeitendes Druckelement 12 gehört. Das Druckelement 12 enthält dazu einen Anschlagrand 12a, an dem das freie Ende der Klinke 9 anliegen kann. Das Druckelement 12 ist aus der Stellung nach Fig. 2 geradlinig in Richtung des Pfeiles C bewegbar und wird mittels Führungsstifte 13 geführt, von denen einer in Fig. 2 sichtbar ist. Um jeden Stift 13 ist eine Schraubenfeder 14 gewickelt, die als Zugfeder das Druckelement 12 in einer dem Pfeil C entgegengesetzten Richtung zu bewegen versucht, aber diese Bewegung wird von einer Schulter 15 im Gehäuse 2 begrenzt. Also ist das Druckelement 12 im Gehäuse in einer Ausgangsstellung entsprechend Fig. 2 positioniert.

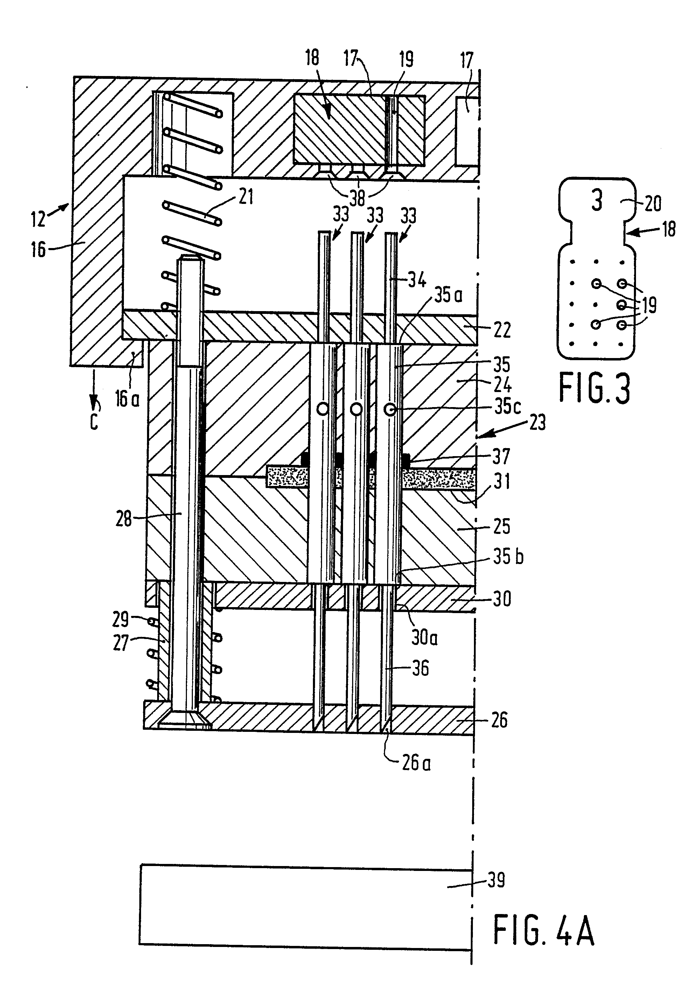

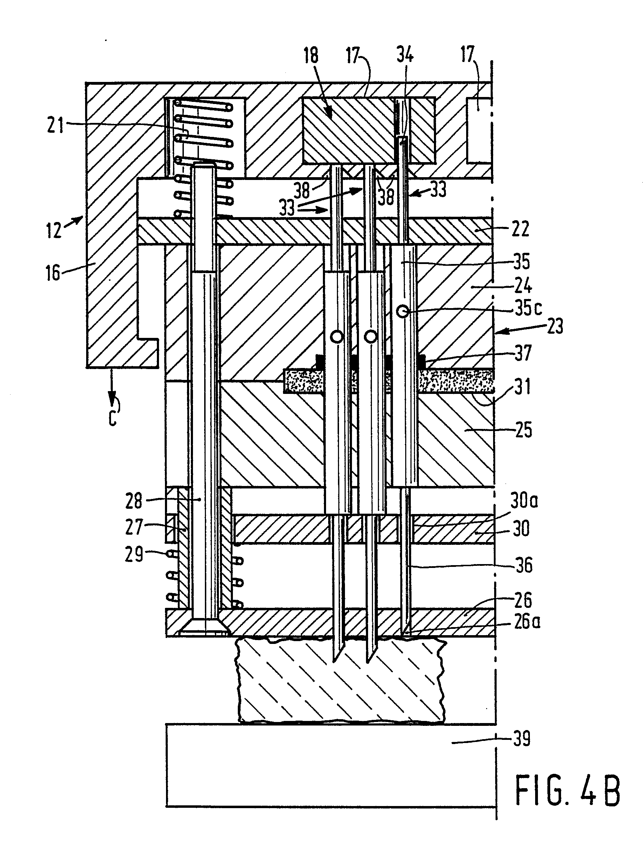

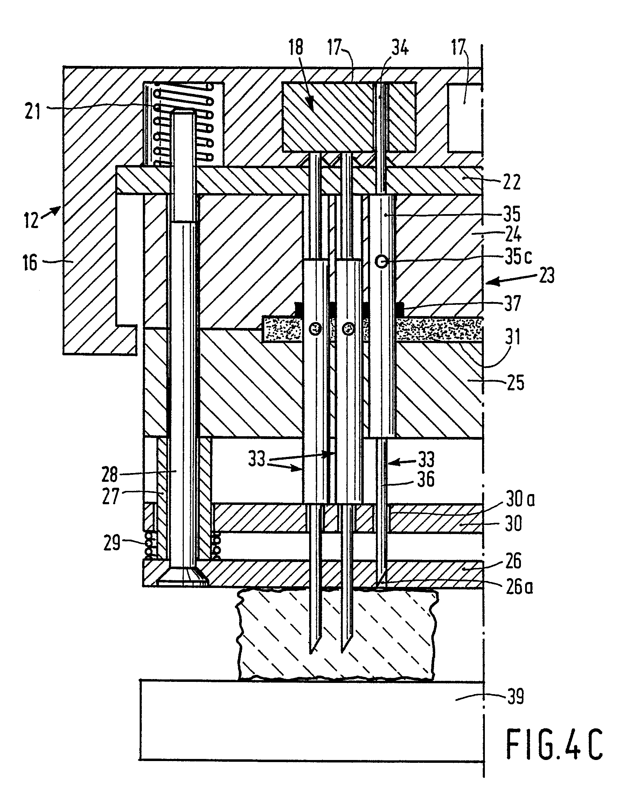

Das Druckelement 12 ist im Abstand vom Anschlagrand 12a mit einem Backen 16 versehen, der in Fig. 4A, B und C dargestellt ist. Der Backen 16 enthält einige schlitzförmige Ausnehmungen 17, in die austauschbare Wählelemente 18 einschiebbar sind. In eingeschobenem Zustand liegt jedes Wählelement 18 in der Ausnehmung 17 entsprechend der Darstellung in Fig. 4A, B und C. In Fig. 3 ist ein Beispiel eines Wählelements 18 dargestellt, das zum Anbringen der Ziffer 3 in einem Objekt auf noch zu beschreibende Weise bestimmt ist. So können z.B. im Backen 16 vier Wählelemente angeordnet werden, wodurch beim Tätowieren ein Symbol mit Markierungen, die beispielsweise vier Ziffern und/oder Buchstaben umfassen, angebracht werden kann. Selbstverständlich ist die Tätowiervorrichtung auf andere Weise zum gleichzeitigen Anbringen von mehr oder weniger als vier Markierungen, die Symbole umfassen, durchführbar. Auch kann auf andere Weise der Backen 16 derart ausgeführt sein, daß nur ein, eine Anzahl von Markierungen umfassendes Wählelement 18 angewandt werden kann.

Abhängig von der anzubringenden Markierung enthält das Wählelement 18 einige sich parallel zum Pfeil C über die ganze Dicke des Elements erstreckende Kanäle 19, während das Wählelement 18 außerdem einen Griff 20 enthält, der nach dem Einschieben in einer Aussparung 2a im Gehäuse 2 liegt. Hierbei kann es vorteilhaft sein, wenn der Griff 20 mit einer Anzeige der Markierung versehen ist, die mit dem Wählelement 18 angebracht wird, wobei die Anzeige an der Außenseite des Gehäuses sichtbar ist. In den Backen 16 ist eine Anzahl, z.B. zehn, in regelmäßigen Abständen voneinander angeordneter Druckfedern 21 aufgenommen, die an eine Anschlagplatte 22 eines Nadelhalters 23 drücken. Die Federn 21 in Fig. 4A drücken die Anschlagplatte 22 an eine Brust 16a auf dem Backen 16, wenn das Druckelement 12 in der Ausgangsstellung steht. In diesem Zustand steht der Nadelhalter 23 in einer ersten Stellung. Der Nadelhalter 23 enthält weiter zwei Hauptteile 24 und 25, eine Grundplatte 26 und eine Anzahl, z.B. zehn, in regelmäßigen Abständen voneinander angeordneter Buchsen 27, durch die Bolzen 28 hindurchgesteckt sind, die mit Gewinde in die Anschlagplatte 22 eingeschraubt sind und damit die Kombination der Anschlagplatte 22, der Hauptteile 24 und 25 und der Grundplatte 26 miteinander verbinden. An der Seite des Backens 16 ragen die freien Enden der Bolzen 28 über eine bestimmte Länge aus der Anschlagplatte 22 heraus und dienen dabei als Führung für die Federn 21. Weiter ist um jede Buchse 30 eine Druckfeder 29 vorgesehen, die eine Druckplatte 30 in der ersten Stellung des Nadelhalters 23 an den Hauptteil 25 drückt und sich auf der Grundplatte 26 abstützt.

Im Nadelhalter 23 befindet sich auf der Trennfläche zwischen den Hauptteilen 24 und 25 eine Flüssigkeitskammer 31, die auf noch zu beschreibende Weise mit einem austauschbaren Flüssigkeitsbehälter 32 (Fig. 2) mit Kontrastflüssigkeit in Verbindung steht. Im Nadelhalter 23 befindet sich weiter ein Bestand matrixförmig angeordneter gerader Nadeln 33, die in der Längsrichtung mit dem Pfeil C in Fig. 4A zwischen einer in Fig. 4A dargestellten unwirksamen Stellung und einer in Fig. 4C dargestellten wirksamen Stellung bewegbar sind. Jede Nadel 33 enthält einen stabförmigen Endteil 34, der sich in der Stellung entsprechend Fig. 4A durch eine Öffnung in der Anschlagplatte 22 bis zu einem bestimmten Abstand über der Platte 22 erstreckt. Der Endteil 34 - schließt sich an einen zylindrischen, zentralen Hohlteil 35 mit einem größeren Durchmesser als der Endteil 34 an, wobei der zentrale Teil mit den Schultern 35a und 35b zwischen der Anschlagplatte 22 und der Druckplatte 30 in den Hauptteilen 24 und 25 positioniert ist. Unter der Schulter 35b schließt der zentrale Teil 35 sich an einen Nadel-Hohlteil 36 an, der sich durch Öffnungen 30a und 26a in der Druckplatte 30 und in der Grundplatte 26 erstreckt. In der unwirksamen Stellung der Nadel 33 nach Fig. 4 befindet sich das abgeschrägte freie Ende des Nadelteils 36, in welchem Ende eine Austrittsöffnung der Nadel 33 vorgesehen ist, gerade innerhalb der Öffnung 26a.

Der zentrale Teil 35 erstreckt sich durch die Flüssigkeitskammer 31. Über der Flüssigkeitskammer 31 ist eine Abschlußplatte 37 vorgesehen, die die Nadel 33 umgibt und damit das Weglecken von Kontrastflüssigkeit verhindert. Auf nicht dargestellte Weise ist auch eine Abschlußplatte an der Unterseite der Flüssigkeitskammer 31 vorgesehen. Der zentrale Teil 35 ist über der Abschlußplatte 37 mit einer Eintrittsöffnung 35c versehen. Durch die in Fig. 4A dargestellte Anordnung kann die Flüssigkeit nicht aus der Flüssigkeitskammer 31 in die Nadel 32 strömen und daher nicht entweichen. Um auf näher zu beschreibende Weise eine Führung für die freien Enden der Endteile 34 zu schaffen, ist im Backen 16 unter der Ausnehmung 17 für jede Nadel 33 eine trichterförmig verlaufende Öffnung 38 vorgesehen, die in die Ausnehmung 17 mündet und sich bei eingebrachtem Wählelement 18 an einen Kanal 19 im Element anschließen kann. So sind in der dargestellten Ausführung als Beispiel insgesamt sechzig Nadeln 33 vorgesehen, die in vier $3 \times 5$-Matrixbeständen angeordnet sind und mit denen gleichzeitig vier Markierungen in einem Objekt angebracht werden können.

Unter der Grundplatte 26 ist ein Unterbacken 39 als Teil des Gehäuses 2 vorgesehen, bei dem im Zustand entsprechend Fig. 4A der Abstand zwischen dem Unterbacken 39 und der Grundplatte 26 groß genug ist, um das Objekt anbringen zu können. Es sei bemerkt, daß auf nicht dargestellte Weise der Abstand zwischen der Grundplatte 26 und dem Unterbacken 39 einstellbar sein kann. Auch kann der Unterbacken 39 für bestimmte Anwendungen abgenommen werden.

Die Flüssigkeitskammer 31 ist außerhalb des Nadelhalters 23 an einen Schlauch 40 (Fig. 20) angeschlossen, der sich an ein Koppelstück 41 anschließt, in dem ein Rücklaufventil verhindert, daß Flüssigkeit aus der Kammer 31 nach dem mit dem Koppelstück 41 verbundenen Behälter 32 zurückfließen kann. Der Behälter 32 ist als eine zylindrische, längliche Patrone ausgeführt und ist mit dem anderen Ende mit einem Koppelstück 42 verbunden. In der Unterseite des Gehäuses 2 ist eine scharnierbare Klappe 43 vorgesehen (siehe auch Fig. 1), durch die es möglich ist, den Behälter 32 auszutauschen. Im Gehäuse ist eine Druckfeder 44 vorgesehen, die über das Koppelstück 41 den Behälter in Richtung des Koppelstücks 42 drückt und damit sowohl eine gute Positionierung des Behälters in der Bedienungseinrichtung als auch einen guten flüssigkeitsdichten Anschluß der Koppelstücke 41 und 42 an den Behälter lediglich nach dem Öffnen der Klappe 43 gegen die Wirkung der Feder 44 in Richtung des Pfeiles D nach links zu bewegen und von den Koppelstücken 41 und 42 zu befreien.

Der Behälter 32 enthält einen Kolben 32a, der mit dem Behälter zweite Druckmittel der Bedienungseinrichtung bildet und Druck auf die Flüssigkeit im Behälter und damit in der Flüssigkeitskammer 31 ausübt. Auch im Koppelstück 42 ist ein Rücklaufventil vorgesehen, das ein unter Druck rechts vom Kolben 32a im Behälter 32 befindliches Fluidum, wie z.B. Luft, einschließt und das Aufrechterhalten des Drucks des Kolbens 32a auf die Flüssigkeit gewährleistet.

Das Koppelstück 42 ist über eine Leitung 45 an eine Pumpvorrichtung 46 nahe bei der Oberseite des Gehäuses angeschlossen. Diese Pumpvorrichtung 46 enthält einen Zylinder 47 und einen darin befindlichen Kolben 48 und bildet dritte Druckmittel der Bedienungseinrichtung 1. Der Kolben 48 ist mit einer Pumpenstange 49 verbunden, die mit dem kugelförmigen freien Ende 49a längs eines Randes der Bedienungseinrichtung 8 des Hebels 4 derart gleiten kann, daß bei der von der Feder 6 unterstützten, rückkehrenden Schwenkung des Hebels 4 in Richtung des Pfeiles A in Fig. 2 die Pumpenstange 49 in Richtung des Pfeiles E bewegt wird, wodurch auf den Kolben 32a einen Druck ausgeübt wird.

Die Wirkung der Tätowiervorrichtung im Ausführungsbeispiel nach Fig. 1 bis 4 ist wie folgt:

Vor Anfang der Tätowierung werden vier Wählelemente 18 mit je einem anzubringenden Symbol durch die Aussparung 2a in die Ausnehmung 17 eingeschoben. Wie bereits erwähnt kann die Vorrichtung auf andere Weise zum Einbringen eines mehrfachen Wählelements geeignet sein, wobei das Einbringen nur eines Wählelements genügt. Die Bedienungseinrichtung 1 ist bereits mit einem Behälter 32 ausgerüstet, dessen Kolben 32a durch das einmalige Betätigen des Hebels 4 über die Pumpvorrichtung 46 erregt ist, wonach der Kolben 32a die Flüssigkeit unter Druck hält. Die Tätowiervorrichtung befindet sich jetzt in der Ausgangslage, wie in Fig. 1, 2 und 4A dargestellt.

Jetzt kann das zu markierende Objekt, z.B. ein zu tätowierendes Ohr eines Tieres, in den Raum zwischen der Grundplatte 26 und dem Unterbacken 39 eingeführt werden. Wie bereits erwähnt, ist ggf. der Abstand zwischen diesen Teilen abhängig von der Dicke des Objekts einstellbar.

Anschließend wird der Bedienungshebel 4 von Hand in der dem Pfeil A in Fig. 1 entgegengesetzten Richtung geschwenkt, was mehrere zum Teil gleichzeitig ablaufende Folgen hat.

Die Klinke drückt in der wirksamen Stellung an den Anschlagrand 12a und drückt gegen der Wirkung der Feder 14 das Druckelement 12 in Richtung des Pfeiles C parallel zur Längsrichtung der Nadeln 33 zum Unterbacken 39 hin. Hierdurch bewegt sich der Backen 16 aus der Ausgangsstellung nach Fig. 4A in die Endstellung nach Fig. 4C. Eine Stellung des Backens 16, bei der gerade eine Anzahl von Nadeln 33 im Objekt steckt, ist in Fig. 4B dargestellt. Die Bewegung des Backens 16 hat zur Folge, daß sofort das Objekt zwischen der Grundplatte 26 und dem Unterbacken 39 eingeklemmt wird, wodurch das Objekt zwischen diesen Teilen festgesetzt wird. Eine fortgesetzte Bewegung des Backens 16 ergibt, daß zunächst der Nadelhalter 23 insgesamt eine relative Bewegung in bezug auf den Backen 16 gegen der Wirkung der Federn 21 ausführt, bis die freien Enden der Endteile 34 einer Anzahl von Nadeln 33 über die Öffnungen 38 an die geschlossene Oberfläche des Wählelements 18 anlaufen. Bei fortgesetzter Bewegung des Backens 16 bewegt sich also der Nadelhalter 23 aus der ersten Stellung nach Fig. 4A in eine zweite Stellung nach Fig. 4C, wobei die Oberfläche der Anschlagplatte 22 an den Backen 16 drückt.

Die Kopplung der Endteile 34 mit dem Wählelement 18 hat bei ständigem Druck des Backens 16 zur Folge, daß sich die gewählte Nadelanzahl in Richtung des Pfeiles C abwärts bewegt und in das Objekt eindringt. In Fig. 4B und 4C ist dargestellt, wie eine Nadel 33 in der unwirksamen Stellung zurückbleibt, da der Endteil 34 dieser Nadel in einem Kanal 19 des Wählelements 18 steckt. Die Abwärtsbewegung der gewählten Nadeln 33 ergibt, daß die Druckplatte 30 in Richtung des Pfeiles C gegen der Wirkung der Federn 29 abwärts gedrückt wird.

Kurz vor dem Erreichen der wirksamen Stellung, nachdem die Nadeln in das Objekt eingeführt sind, werden die Eintrittsöffnungen 35c der Nadeln 33 in die Flüssigkeitskammer 31 gebracht, wodurch die Kontrastflüssigkeit in Richtung der Austrittsöffnungen in die Nadeln hineinfließen kann. Dieser Zeitpunkt der Zufuhr von Flüssigkeit wird durch die Abmessung und Lage der Flüssigkeitskammer 31 in bezug auf die Nadeln bestimmt. Die Folge davon ist, daß beim Erreichen der wirksamen Stellung durch die Austrittsöffnungen die Flüssigkeit in das Objekt hineinfließt und die Markierung angebracht wird. Infolge des Flüssigkeitsstromes und des Luftdrucks ist der Kolben 32a entsprechend Fig. 2 nach links verschoben (Pfeil D), und diese Verschiebung ist vorzugsweise durch die Bemessung der verschiedenen Bauteile ausreichend zum Zuführen einer abgemessenen Menge zu den Nadeln für eine Markierungshandlung. Nach dem Vollenden der vorbeschriebenen Handlung wird bei fortgesetzter Schwenkung des Hebels 4 die Klinke 9 frei vom Druckelement 12. Die Folge davon ist, daß die Federn 14 mit Unterstützung von den Federn 21 das Druckelement 12 und damit den Backen 16 in entgegengesetzter Richtung des Pfeiles C zurückbewegen. Die Folge davon ist, daß jetzt die Druckplatte 30 unter dem Einfluß der Wirkung der Federn 29 zurückbewegen kann, was ein gleichmäßiges, geradlinig verlaufendes Zurückbewegen der gewählten Anzahl von Nadeln 33 in die unwirksame Stellung nach Fig. 4A ergibt. Während der Bewegung werden die Eintrittsöffnungen 35c gleichzeitig erneut geschlossen, wodurch die Flüssigkeitskammer 31 jetzt ebenfalls abgeschlossen ist. Durch die Kapillarwirkung in den Hohlnadeln bleibt die Flüssigkeit in den Nadeln zurück, so daß keine Verunreinigungen durch die Eintrittsöffnungen in die Nadeln eindringen können und der Flüssigkeitsstrom nach den Austrittsöffnungen bei einer folgenden Tätowierhandlung sofort anfangen kann. Der Nadelhalter nimmt schließlich erneut die erste Stellung nach Fig. 4A ein.

Nach dem Erreichen der erregten Stellung bringt die Feder 6 den Hebel 4 in die Ausgangsstellung zurück. Diese Bewegung ist dadurch möglich, daß die Klinke 9 scharnieren und so das Druckelement 12 vorbeikommen kann. Die verschiedenen zum Bedienen wichtigen Zeitpunkte sind durch Klickgeräusche von der Klinke 9 hörbar gemacht. Die Rückbewegung hat auf die bereits beschriebene Weise eine Erregung der Pumpvorrichtung 46 ergeben, wodurch es wieder genügend Druck auf den Kolben 32a und also auf die Flüssigkeitskammer 31 für eine folgende Tätowierhandlung gibt. Sofort nach dem Erreichen der Ausgangsstellung des Hebels 4 ist die Vorrichtung zum Anbringen einer Tätowierung bei einem folgenden Objekt bereit. Erforderlichenfalls kann hier ein anderes Wählelement eingeschoben werden, wenn eine andere Tätowierung verlangt wird.

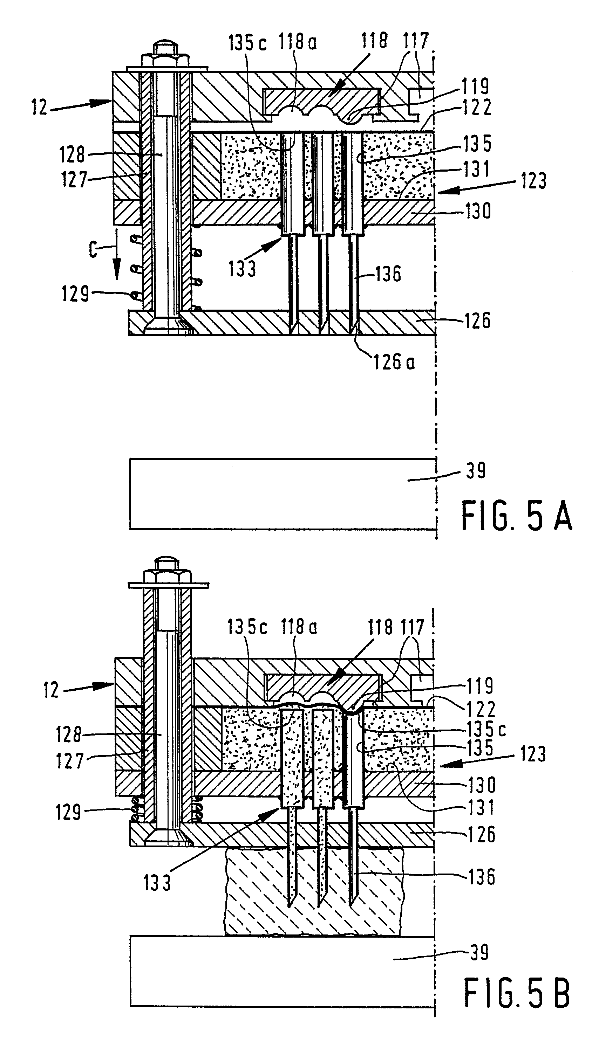

Das Ausführungsbeispiel nach Fig. 5A und 5B stellt eine Abwandlung der Tätowiervorrichtung in Fig. 1 und 2 dar. Deswegen sind entsprechend ausgeführte Bauteile der Vorrichtung weggelassen, während für einen einfachen Vergleich entsprechend funktionierende Bauteile mit einer um 100 erhöhten Bezugsziffer bezeichnet sind.

Das Druckelement 12 enthält Ausnehmungen 117, in die Wählelemente 118 eingeschoben sind. Sie weisen Vorsprünge 119 auf, mit denen Eintrittsöffnungen 135c der Nadeln 133 über eine elastische Anschlagplatte 122 (z.B. aus Teflon) beim Andrücken des Elements 12 geschlossen werden können (Fig. 5B). Weiter sind in den Elementen 118 Aussparungen 118a vorgesehen, die dazu dienen, trotz der Platte 122 Flüssigkeit in die Eintrittsöffnungen 135c zuführen zu können. Das Druckelement 12 enthält Aussparungen, durch die Buchsen 127 eingesteckt sind. Diese sind mittels Bolzen 128 mit einer Grundplatte 126 verbunden. Um die Buchsen 127 herum befinden sich Federn 129 zwischen der Platte 126 und einer Druckplatte 130. Diese Federn Drücken im Zustand nach Fig. 5A die Druckplatte 130 und die damit fest verbunden Nadeln 133 nach oben, so daß sie mit den Nadelteilen 136 in den Öffnungen 126a in der Platte 126 liegen.

Die Druckplatte 130 bildet mit der Platte 122 zusammen einen Teil eines Nadelhalters 123, der gleichfalls eine Flüssigkeitskammer 131 enthält. In der Kammer 131 erstrecken sich die Nadeln 133 mit zentralen Teilen 135, die an den Enden die Öffnungen 135c enthalten. In der Ausgangsstellung nach Fig. 5A sind die Nadeln in die unwirksame Stellung zurückgezogen, wobei die Eintrittsöffnungen 135c von der Platte 122 geschlossen sind. Bei der Erregung bewegt sich das Druckelement 12 in Richtung des Pfeiles C herab, wobei das Wählelement 118 mit den Vorsprüngen 119 über die Anschlagplatte 122 an zu - schliessende Nadeln 133 drückt. Dieser Druck hat zur Folge, daß mit diesen Nadeln auch die Platte 130 und dadurch auch die anderen Nadeln abwärts in die Stellung nach Fig. 5B bewegt werden. Durch die Aussparungen 118a kann der Druck in der Flüssigkeitskammer 131 die elastische Platte 122 stellenweise über den Eintrittsöffnungen 135c einer Anzahl von Nadeln wegdrücken, so daß diese Öffnungen frei werden und Flüssigkeit diese Nadeln durchfließen kann.

Bei diesem Ausführungsbeispiel werden alle Nadeln in das Objekt hineingetrieben, wobei über das Wählelement 118 bestimmt wird, welche Nadeln 133 für die Flüssigkeitszufuhr geöffnet werden, nachdem die Nadeln in die wirksame Stellung eingeführt sind.

Es sei bemerkt, daß die Abdichtung der Flüssigkeitskammer 131 durch die feste Anordnung der Nadeln 133 auf der Platte 130 einfach durchführbar ist. Weiter sei hinsichtlich dieses Ausführungsbeispiels bemerkt, daß das Wählelement 118 zum Schließen von Eintrittsöffnungen 135c sich auch vorteilhaft auswirken kann, wenn das Element 118 auf andere Weise einen örtlichen flachen Verlauf hat. Hierdurch kann das Hineinschieben des Elements 118 in die Ausnehmung 117 leicht erfolgen.

Ein Vorteil bei der Tätowiervorrichtung in den Ausführungsbeispielen nach der Erfindung ist die Anwendung eines austauschbaren Wählelements, das preisgünstig ausführbar ist und keine hohen Toleranzbedingungen erfüllen muß. Ein anderer Vorteil ist der in einer Anzahl von Phasen ablaufende Tätowierzyklus, und zwar die Fixierungsphase, in der das Objekt eingeklemmt wird, die Durchdringungsphase, in der die Nadeln in das Objekt eindringen, die Flüssigkeitszufuhrphase, in der Flüssigkeit durch die Nadeln in das Objekt eindringt, die Rückziehphase der Nadeln aus dem Objekt sowie die Phase des Druckaufbaus auf der Flüssigkeit für eine folgende Tätowierhandlung. Weiter ist die leichte Austauschbarkeit des Behälters 32 vorteilhaft, so daß möglichst wenig Zeit verloren zu gehen braucht, wenn nach einigen Tätowierhandlungen der Behälter leer ist. Die Anwendung der Druckplatte 30 bzw. 130 bietet den Vorteil einer einfachen Zusammensetzung des Nadelhalters sowie die Möglichkeit zum Anwenden verhältnismäßig dünner Nadeln, was von Vorteil ist zum Anbringen eines verhältnismäßig kleinen oder feinmaschigen Symbols und auch für ein leichtes Durchdringen der Nadel in das Objekt.

**Ansprüche**

1. Tätowiervorrichtung, bestehend aus
-einem Nadelhalter (23, 123) mit einem Bestand matrixförmig angeordneter Hohlnadeln (33, 133), die in der Längsrichtung zwischen einer wirksamen und einer unwirksamen Stellung bewegbar sind und je eine Eintritts-und eine Austrittsöffnung enthalten,
-einem austauschbaren, Kontrastflüssigkeit enthaltenden Behälter (32), der in wirksamer Stellung der betreffenden Nadeln (33, 133) über die Eintrittsöffnungen (35c, 135c) mit den Hohlräumen in diesen Nadeln (33, 133) in Verbindung steht,
-einem austauschbaren Wählelement (18, 118), das in Abhängigkeit vom anzubringenden Symbol mit Nadeln (33, 133) des Bestands koppelbar ist,
-einer Bedienungseinrichtung (1), die mit dem Nadelhalter (23, 123), dem Wählelement (18, 118) und dem Behälter (32) zusammenarbeitet und Druckmittel enthält, von denen
  . erste Druckmittel (12) bei der Erregung über das Wählelement (18, 118) Nadeln (33, 133) in die wirksame Stellung bringen, die mit den freien Enden in das zu tätowierende Objekt drücken, und
  . zweite Druckmittel (32a) Druck auf die Flüssigkeit im Behälter (32) ausüben und die Flüssigkeit durch die Hohlräume über die Austrittsöffnungen einer Anzahl vom Wählelement (18, 118) ausgewählten Nadeln (33, 133) in das Objekt hineinpressen,
dadurch gekennzeichnet , daß
-der Nadelhalter (23, 123) eine Flüssigkeitskammer (31, 131) enthält, die mit dem Behälter (32) in Verbindung steht und in der sich die Nadeln (33, 133) für einen Teil ihrer Länge erstrecken,
-die Eintrittsöffnungen (35c, 135c) der Nadeln (33, 133) in der unwirksamen Stellung in bezug auf die Flüssigkeitskammer (31, 131) geschlossen sind, während ausschließlich die Eintrittsöffnungen (35c, 135c) der genannten Anzahl vom Wählelement (18, 118) gewählter Nadeln in der wirksamen Stellung dieser Nadeln (33, 133) in bezug auf die Flüssigkeitskammer (31, 131) geöffnet sind.

2. Tätowiervorrichtung nach Anspruch 1, bei der die ersten Druckmittel ein mit dem Nadelhalter (23, 123) zusammenarbeitendes Druckelement (12) enthalten, um Nadeln (33, 133) mit Hilfe des Wählelements (18, 118) in die wirksame Stellung einzuführen und in das Objekt hineinzudrücken,
dadurch gekennzeichnet , daß
der Nadelhalter (23, 123) mit den Nadeln (33, 133) in bezug auf das Druckelement (12) in der Längsrichtung der Nadeln (33, 133) zwischen einer ersten und einer zweiten Stellung bewegbar ist, wobei durch diese Bewegung eine Kopplung bzw. eine Entkopplung zwischen Endteilen (34) von Nadeln (33, 133) und dem Wählelement (18, 118) erfolgt.

3. Tätowiervorrichtung nach Anspruch 2, bei der der Nadelhalter (23, 123) eine Grundplatte (26, 126) mit Öffnungen (26a, 126a) enthält, wodurch die freien Enden der Nadeln (33, 133) bewegbar sind,
dadurch gekennzeichnet, daß
bei der Erregung des Druckelements (12) der Nadelhalter (23, 123) in bezug auf das Druckelement (12) gegen Federwirkung aus der ersten in die zweite Stellung übergeht, nachdem die Grundplatte (26, 126) an das Objekt gedrückt ist, und daß der Nadelhalter (23, 123) eine Druckplatte (30, 130) enthält, die nach der Kopplung von Nadeln (33, 133) und Wählelement (18, 118) von den Nadeln (33, 133) während der Bewegung in die wirksame Stellung gegen Federwirkung in Richtung der Grundplatte (26, 126) gedrückt wird.

4. Tätowiervorrichtung nach Anspruch 3,
dadurch gekennzeichnet, daß
die Druckplatte (30, 130) nach Ablauf der Erregung des Druckelements (12) unter Federwirkung von der Grundplatte (26, 126) weg bewegt und dabei die in der wirksamen Stellung befindlichen Nadeln (33, 133) zusammen in die unwirksame Stellung zurückbringt.

5. Tätowiervorrichtung nach Anspruch 4,
dadurch gekennzeichnet, daß
die Druckplatte (30, 130) die Nadeln (33, 133) in der unwirksamen Stellung an eine Anschlagplatte (22, 122) des Nadelhalters drückt, und diese Anschlagplatte (22, 122) den Nadelhalter (23, 123) in der ersten und in der zweiten Stellung in bezug auf das Druckelement (12) positioniert.

6. Tätowiervorrichtung nach Anspruch 5,
dadurch gekennzeichnet, daß
die Flüssigkeitskammer (31, 131) im Nadelhalter (23, 123) zwischen der Druckplatte (30, 130) und der Anschlagplatte (22, 122) angeordnet ist und die Nadeln (33, 133) sich wenigstens in der wirksamen Stellung mit den Eintrittsöffnungen (35c, 135c) in der Flüssigkeitskammer (31) befinden.

7. Tätowiervorrichtung nach Anspruch 6,
dadurch gekennzeichnet, daß
die Druckplatte (130) mit allen Nadeln (133) fest verbunden ist und in der wirksamen Stellung der Nadeln (133) die Anschlagplatte (122) vom Wählelement (118) an die Eintrittsöffnungen (135c) von Nadeln (133) gedrückt wird, so daß diese Nadeln in bezug auf die Flüssigkeitskammer (131) abgeschlossen sind (Fig. 5).

8. Tätowiervorrichtung nach einem der Ansprüche 2 bis 7, bei der die Bedienungseinrichtung (1) einen Bedienungshebel (4) enthält,
dadurch gekennzeichnet, daß
der Hebel (4) nahe bei einem Ende ·eine · scharnierbare Klinke (9) trägt, die mit dem Hebel (4) ein Teil der ersten Druckmittel ist und bei der Erregung in einer wirksamen Stellung eine Kraft auf das Druckelement (12) ausübt, bei einer gemeinsamen Schwenkung mit dem Hebel (4) nach einer unwirksamen Stellung scharniert und in einer Ausgangsstellung des Hebels (4) unter Federwirkung nach der wirksamen Stellung zurückscharniert.

9. Tätowiervorrichtung nach Anspruch 8,
dadurch gekennzeichnet, daß
die Bedienungseinrichtung (1) mit dritten Druckmitteln versehen ist, die eine Pumpvorrichtung (46) enthalten, die bei der Schwenkung des Hebels (4) erregt wird und Druck auf einen im Behälter (32) vorhandenen Kolben (32a) ausübt, der ein Teil der zweiten Druckmittel ist und die Flüssigkeit im Behälter (32) und in der Flüssigkeitskammer (31, 131) ständig unter Druck hält.

10. Tätowiervorrichtung nach Anspruch 9,
dadurch gekennzeichnet, daß
der Behälter (32) als längliche Patrone ausgeführt ist, die mit Hilfe einer Druckfeder (44) in der Bedienungseinrichtung (1) angebracht und nahe bei einem ersten Ende über ein Rücklaufventil mit der Pumpvorrichtung (46) und nahe bei einem zweiten Ende über ein Rücklaufventil mit der Flüssigkeitskammer (31, 131) verbunden ist.

11. Bedienungseinrichtung (1) zur Anwendung mit der Tätowiervorrichtung nach Anspruch 1.

12. Austauschbarer Behälter (32) zur Anwendung mit der Tätowiervorrichtung nach Anspruch 1.

13. Austauschbares Wählelement (18, 118) zur Anwendung mit der Tätowiervorrichtung nach Anspruch 1.

FIG. 1

0 269 164

FIG. 2

FIG.3

FIG. 4A

FIG. 4B

FIG.4C

FIG. 5 A

FIG. 5 B

6 -Ⅵ- ∏ 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 025 252 (DAWSONVILLE) * Figuren 7,8; Seite 8, Zeile 22 - Seite 10, Zeile 10 * | 1 | A 01 K 11/00 A 61 M 37/00 A 61 D 7/00 |
| A | | 2 | |
| Y | US-A-4 194 505 (SCHMITZ) * Figuren 3,5,6,8; Spalte 4, Zeile 20 - Seite 5, Zeile 9 * | 1 | |
| A | EP-A-0 070 594 (DAWSONVILLE) | | |

| RECHERCHIERTE SACHGEBIETE (Int. Cl.4) |
|---|
| A 01 K A 61 M |

Der vorliegende Recherchenbericht wurde für alle Patentansprüche erstellt

| Recherchenort | Abschlußdatum der Recherche | Prüfer |
|---|---|---|
| DEN HAAG | 12-02-1988 | VILBIG K |

EPO FORM 1503 03.82 (P0403)